(19)

Europäisches
Patentamt
European
Patent Office
Office européen
des brevets

(11) **EP 4 755 551 A1**

(12) **EUROPEAN PATENT APPLICATION**

(43) Date of publication:
**10.06.2026  Bulletin 2026/24**

(21) Application number: **24217615.4**

(22) Date of filing: **04.12.2024**

(51) International Patent Classification (IPC):
***B23B 1/00*** *(2006.01)*       ***B23B 27/16*** *(2006.01)*

(52) Cooperative Patent Classification (CPC):
**B23B 1/00;** B23B 2210/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AB Sandvik Coromant**
**811 81 Sandviken (SE)**

(72) Inventors:
• **WICKSTRÖM, David**
**811 81 Sandviken (SE)**
• **LÖF, Ronnie**
**811 81 Sandviken (SE)**
• **WIKBLAD, Krister**
**811 81 SANDVIKEN (SE)**

(74) Representative: **Sandvik**
**Sandvik Intellectual Property AB**
**811 81 Sandviken (SE)**

(54) **METHOD FOR MACHINING A METAL WORKPIECE**

(57)    The invention relates to a method for machining a surface of a metal workpiece (20) using a turning tool (10) comprising a tool body and a first cutting insert (1) arranged at a front end (8) of the tool body, wherein the method comprises:
- a facing step (31) in which the turning tool is moved along a radial direction (X) such that the first cutting insert (1) cuts chips from a radial portion (22) of the metal workpiece at an entering angle (E1) of a first cutting edge (2) of the first cutting insert of 10°- 45°;
- a first entering step (32) in which the turning tool, before the first cutting insert reaches a longitudinal portion of the workpiece, is moved away from the radial portion along a first entering path (L1) that is transverse to both a longitudinal direction (Z) and the radial direction (X), such that the first cutting insert cuts chips from the longitudinal portion (21) of the metal workpiece at an entering angle (E2) of a second cutting edge (3) of the first cutting insert of 45°-120°; and
- a first longitudinal turning step (33) in which the turning tool (10) is moved along the longitudinal direction (Z) away from the radial portion (22) such that the first cutting insert (2) cuts chips from the longitudinal portion (21) of the metal workpiece (20) at an entering angle (E3) of the second cutting edge (3) of 10°-45°.

Fig. 2B

EP 4 755 551 A1

## Description

TECHNICAL FIELD

The invention relates to metal cutting, and in particular to turning operations wherein a turning tool is used for machining a rotating metal workpiece.

BACKGROUND ART

Within the field of metal cutting, a turning tool may be used for machining the surface of a rotating metal workpiece. A cutting insert, for example made of cemented carbide or some other wear resistant material, is commonly arranged at the front of such turning tool.

Workpieces to be machined may come in various shapes. A workpiece may often have a generally longitudinal extension along the rotation axis thereof but also include one or more radial portions or "shoulders", i.e., portions of the workpiece extending in a radial direction (in a plane perpendicular to the rotation axis). It may be challenging to efficiently machine such workpieces, in particular in the vicinity of a corner formed at the transition between the radial portion and a longitudinal portion connected therewith. If the corner is the result of a forging process, such corner may have significant variations in dimension and shape, rendering the machining in the vicinity of the corner particularly challenging.

Traditionally, when using a turning tool for longitudinal turning of a workpiece including a shoulder, the feed of the turning tool is directed towards the shoulder. However, in recent years it has become increasingly popular to use turning tools engaging the workpiece at low entering angles, in which case a feed direction towards a shoulder may not be very suitable. In such cases, a feed direction away from the shoulder is often used instead, and, correspondingly, if machining the shoulder portion in a so called "facing" operation, the feed direction is usually radially outwards, away from the workpiece rotation axis. EP3359321 B1 discloses such turning methods. In a turning operation according to such methods, when entering the material close to the corner, the turning tool is usually moved such that a nose cutting edge of the cutting insert enters the workpiece, i.e., goes into cut, in a motion along an arc of a circle. Such entry may be suitable mainly if using slender cutting inserts with small nose angles that are not very strong and robust. An entry along an arcuate path may also generate long chips that are difficult to handle, especially if the variation in shape and dimension of the corner is significant.

Hence, there is a need for improved methods for turning, in particular when machining workpieces including shoulders.

SUMMARY

It is an object of the present invention to mitigate the shortcomings of the prior art and to provide a method for machining a workpiece using a turning tool that efficiently machines a shoulder of the workpiece as well as a longitudinal portion of the workpiece extending from the shoulder. Another object is to provide turning methods suitable for turning tools that includes strong cutting inserts with large nose angles.

Thus, according to a first aspect, the invention relates to a method for machining a surface of a metal workpiece using a turning tool, wherein the turning tool comprises a tool body having a longitudinal extension from a rear end to a front end thereof, and a first cutting insert arranged at the front end, wherein the first cutting insert includes a first cutting edge, a second cutting edge, and a convex nose cutting edge connecting the first and the second cutting edges. The metal workpiece rotates around a rotation axis extending along a longitudinal direction of the workpiece, wherein the workpiece comprises a longitudinal portion extending in the longitudinal direction, a radial portion extending in a radial direction with respect to the rotation axis, and a corner portion connecting the longitudinal portion and the radial portion.

The method comprises:

- a facing step in which the turning tool is moved along the radial direction towards the rotation axis and the corner portion such that the first cutting insert cuts chips from the radial portion of the metal workpiece at an entering angle of the first cutting edge of 10°- 45°,

- a first entering step in which the turning tool, before the first cutting insert reaches the longitudinal portion, is moved away from the radial portion and towards the rotation axis along a first entering path that is transverse to both the longitudinal direction and the radial direction, such that the first cutting insert cuts chips from the longitudinal portion of the metal workpiece at an entering angle of the second cutting edge of 45°-120°, and

- a first longitudinal turning step in which the turning tool is moved along the longitudinal direction away from the radial portion such that the first cutting insert cuts chips from the longitudinal portion of the metal workpiece at an entering angle of the second cutting edge of 10°-45°.

When using such method, different cutting edges of the first cutting insert are utilized in different machining operation steps, and both facing and longitudinal turning can be performed at a low entering angle using the same cutting insert (i.e., not requiring a tool change). Significant portions of the available cutting edges of the tool, including portions of the first cutting edge as well as portions of the second cutting edge, may be engaged in cutting chips from the workpiece, providing an effective overall utilization of the cutting insert.

An "entering angle" as used herein should be understood as the angle between the feed direction and the cutting edge. A "low" or "small" entering angle as used herein refers to an entering angle below 45°.

The method may be particularly beneficial when used with cutting inserts having a relatively large nose angle (the angle between the first cutting edge and the second cutting edge in a top view of the cutting insert), such as within a range of 70° - 110 °, which makes it easy to perform both the facing step and the longitudinal turning step at a low entering angle of the respective first and second cutting edges. A further advantage is that such cutting inserts are strong and robust.

The first cutting edge and the second cutting edge are preferably straight in a top view of the cutting insert. Consequently, the entering angle along these cutting edges does not change.

The first cutting insert may be an indexable cutting insert including one or more additional sets of first, second, and nose cutting edges, such that different sets of cutting edges can be positioned in active or inactive positions depending on how the cutting insert is mounted in the insert seat.

The entering angle of the second cutting edge during the first entering step may be relatively close to 90°, for example within a range of 60°-120°. The inventors have found that such entering angle will often result in chips that are easy to handle. The chip control, and thus the reliability of the cutting process, is thereby improved. Moreover, the wear on the cutting insert will be reduced. The entering angle of the second cutting edge during the first entering step may for example be in a range of 70° - 110°, or in a range of 80°- 100°. However, it is also envisaged that a smaller entering angle, for example as small as 45°, is used in the first entering step.

In each of the machining steps according to the method described herein, a nose cutting edge connected to the first and/or second cutting edge will engage the workpiece and cut chips therefrom. Such nose cutting edge is the part that generates the machined surface. For the first entering step and the first longitudinal turning step, such nose cutting edge corresponds to the nose cutting edge connecting the first cutting edge and the second cutting edge. For the facing step, on the other hand, the nose cutting edge that generates the machined surface on the radial portion is a nose cutting edge following the first cutting edge at the other end thereof. For some types of cutting inserts, for example cutting inserts with a nose cutting edge having a considerable extension (big radius), it is envisaged (although usually not preferred in order to obtain a beneficial chip formation) that *only* the nose cutting edge is engaged in cutting during some of the machining steps discussed herein. In other words, the first or second cutting edge is not necessarily engaged in cutting chips from the workpiece in each machining step but is nevertheless oriented with respect to the workpiece such that the cutting edges *would* form entering angles as defined herein if engaging the workpiece. The entering angle along the nose cutting edge obviously vary due to the convex curvature thereof, but it will be similar to the entering angle of the associated first or second cutting edge at least in the vicinity thereof.

During the first entering step, simultaneous cutting of the radial portion and the longitudinal portion, wherein both the first cutting edge and the second cutting edge are in cut at the same time, should normally be avoided for achieving a reliable cutting process with beneficial chip formation and manageable cutting forces. The first entering path may therefore be directed away from the radial portion to such extent that the first cutting edge does not cut chips from the radial portion during the first entering step.

According to some embodiments, the first entering path is a straight line. Such straight line may form an angle of 40° - 80° to the longitudinal direction.

To ensure that the first cutting edge does not engage the radial portion during the first entering step, the first entering path may fulfill:

$$D1 \leq 90 - E1$$

Wherein D1 is the angle formed to the longitudinal direction by the straight line defining the first entering path, and E1 is the entering angle of the first cutting edge during the facing step.

A movement along a straight line in the first entering step, when leaving the radial portion, may be advantageous from a chip formation perspective and would usually be the most effective path for entering the longitudinal portion, minimizing the amount of remaining uncut material in the vicinity of the corner portion. Nevertheless, it is also envisaged that the first entering path may be curved, for example extending along an arc of a circle, for the whole of, or a part of, the entering path. The entering angle of the first cutting edge will nevertheless be in a range of 45°-120° along at least a part of, and preferably along more than half of the first entering path. For example, according to some embodiments, irrespective of whether the entering path is straight or (partly) curved, the entering angle of the first cutting edge may be in a range of 45°-120° along the whole extension of the first entering path.

The method described hereinabove may be repeated to remove more material from the radial portion and the longitudinal portion.

Moreover, the method may include further method steps for removing additional material from the longitudinal portion and/or the corner portion. Hence, according to some embodiments, the method comprises, after the first longitudinal turning step:

- a second entering step in which the turning tool is moved towards the radial portion and the rotation axis along a second entering path that is transverse to both the longitudinal direction and the radial direction, such that the first cutting insert cuts chips from the longitudinal portion of the metal workpiece at an entering angle of the first cutting edge of 60°-120°, and

- a second longitudinal turning step in which the turning tool is moved along the longitudinal direction away from the radial portion such that the first cutting insert cuts chips from the longitudinal portion of the metal workpiece at an entering angle of the second cutting edge of 10°- 45°.

A movement of the turning tool towards the radial portion corresponds to a movement resulting in that the turning tool, and particularly the first cutting insert, approaches a plane in which the radial portion extends. Hence, when moving the turning tool in a direction that is both towards the radial portion and towards the rotation axis, the first cutting insert approaches the rotation axis and the plane in which the radial portion extends.

The turning tool is moved in the second entering step such that the entering angle of the first cutting edge is in the range 60°-120°. An entering angle close to 90°, such as an entering angle in the range of 70° - 110°, for example in a range of 80°- 100°, may be particularly beneficial for many applications. Like the first entering path, also the second entering path may be a straight line. According to some embodiments, such straight line may form an angle of 5° - 45° to the longitudinal direction, and such angle may be equal to, or less than, the entering angle of the second cutting edge in the second longitudinal turning step. Such entering path may ensure that the second cutting edge does not cut chips from the longitudinal portion during the second entering step. A second entering path in the form of a straight line forming an angle to the longitudinal direction that is equal to, or substantially equal to, the entering angle of the second cutting edge in the second longitudinal turning step may provide a particularly efficient (steep) entry into the longitudinal portion of the workpiece. However, in some cases a less steep entry into the workpiece may be preferred.

According to some embodiments, the turning tool comprises a second cutting insert that includes:

- a first cutting edge,
- a second cutting edge, and
- a convex nose cutting edge connecting the first and the second cutting edges,

and wherein the second cutting insert is arranged at the front end of the tool body beside the first cutting insert such that, with respect to the longitudinal extension of the tool body, a front point of the second cutting insert is located rearward of a front end, but forward of a rear end, of the second cutting edge of the first cutting insert, and wherein, in the second longitudinal turning step, both the first cutting insert and the second cutting insert cut chips from the longitudinal portion of the metal workpiece at entering angles of the respective second cutting edges of 10°- 45°.

A front point of the second cutting insert should be understood as the point that is located, with respect to the longitudinal extension of the turning tool body, in front of any other point on the second cutting insert and is also the point of the second cutting insert that is located closest to the rotation axis of the workpiece when the turning tool is arranged for machining the workpiece.

Correspondingly, a front end and a rear end of the second cutting edge of the first cutting insert should be understood as the end points of the second cutting edge that are located, with respect to the longitudinal extension of the turning tool body, closest to the front end and the rear end, respectively, of the turning tool body.

The use of a turning tool having multiple cutting inserts arranged in this way will, in a cost effective way, provide the possibility to use a large cutting depth.

More specifically, with such arrangement, the second cutting edge of the second cutting insert can be seen as a continuation of the second cutting edge of the first cutting insert. Due to the convexly curved nose cutting edges and the required separation between the cutting inserts, the respective second cutting edges need to overlap to some extent in a direction along the longitudinal extension of the turning tool body. However, the combined length of the respective second cutting edges of the first and second cutting inserts, along the longitudinal extension of the turning tool body, will still be greater than the length of each individual second cutting edge, meaning that a greater cutting depth can be achieved. Preferably, but not necessarily, the entering angles of the respective second cutting edges during the longitudinal turning steps are the same.

For some configurations of first and second cutting inserts, in particular when both the first and the second cutting inserts are of the positive type and not tipped in with respect to the turning tool for obtaining clearance to the workpiece, it may be possible to engage the workpiece with both cutting inserts during the second entering step. Hence, according to some embodiments, the second cutting insert engages the workpiece during at least a part of the second entering step, wherein both the first and the second cutting inserts cut chips from the longitudinal portion of the workpiece at entering angles of the respective first cutting edges of 60°-120°. Such method may provide a particularly efficient and easy entering into the workpiece before commencing the longitudinal turning step.

For other configurations, for example wherein the second cutting insert is of a negative type, entering the workpiece with the first cutting edge of the second cutting insert during the second entering step may not be possible since an inclined orientation of the cutting insert with respect to the turning tool body (that might be required to obtain clearance to the workpiece) may result in that the flank of the second cutting insert would engage the workpiece surface in the entering step. Hence, when using such cutting insert configurations, another approach may be required for the second entering step that guarantees that the first cutting edge of the second cutting insert does not engage the workpiece. Therefore, according to some embodiments, the method comprises, after the first longitudinal turning step and before the second entering step:

- a positioning step in which the turning tool is moved along the longitudinal direction towards the radial portion to an intended start position for the second entering step.

For example, such intended start position for the second entering step may be a position in which radial clearance for the second cutting insert with respect to the workpiece is obtained, i.e., a position in which at least a part of the second cutting insert is located radially outwards from a portion of the workpiece surface that has already been machined by the first cutting insert during the first longitudinal turning step, such that the second cutting insert will not engage the workpiece during the subsequent second entering step.

The method may comprise additional steps. As an example, method steps corresponding to the positioning step and the second entering step may be repeated one or more times before commencing the second longitudinal turning step. Repeating the positioning step and the second entering step may be beneficial if the turning tool includes three or more cutting inserts arranged beside each other and a relatively steep second entering path (towards the workpiece rotation axis) is required or preferred to obtain a favorable cutting process. A second positioning step following the second entering step would involve that the first cutting insert cuts chips from the longitudinal portion of the workpiece at an entering angle of the first cutting edge that is smaller than the entering angle used for the second entering step. More specifically, the magnitude by which the entering angle in the second positioning step is smaller than the entering angle in the second entering step corresponds to the angle at which the turning tool was moved with respect to the longitudinal direction during the second entering step, i.e., the angle to the longitudinal direction formed by the second entering path.

The method described herein is adapted for efficient cutting close to a shoulder of a workpiece. Hence, the first and second entering steps comprises cutting chips from a region of the radial and longitudinal portions, respectively, in the immediate vicinity of the corner portion.

The corner portion is usually not a completely abrupt transition from the radial portion to the longitudinal portion but is rather formed by a radius or curved portion, forming a smooth (or at least extended) transition between the radial and longitudinal portions. In particular, if the corner portion is formed by a forging process, the corner portion may have an extension that is significant.

In some of the cutting steps, at least a part of the corner portion may be engaged by the first cutting insert. Thus, according to some embodiments, at least one of the facing step, the first entering step, and the second entering step comprises cutting chips from at least a part of the corner portion.

According to another aspect, the invention relates to a system comprising a computer numerical controlled (CNC) machine tool including a turning tool for machining a metal workpiece, wherein the system further comprises processing circuitry and a memory and is configured to perform the method according to any of the embodiments described herein.

The CNC machine tool may be any machine tool that can be used for turning a metal work piece, and where the motion of the machine, such as tool path, depth of cut, feed rate, cutting speed and revolutions per time unit, is or can be controlled by a computer.

The processing circuitry and memory may be intrinsic parts of the CNC machine tool, e.g., comprised in the built-in controller of the CNC machine tool. Alternatively, or in combination, an external processing circuitry and memory may be in communicational contact with the CNC machine tool. The processing circuitry is configured to control the CNC machine tool, and thus the movement of the turning tool.

The processing circuitry may comprise one or more programmable processors, application-specific integrated circuits, field programmable gate arrays or combinations of these adapted to execute instructions. The memory may contain instructions executable by said processing circuitry, whereby the CNC machine tool is operative for machining the workpiece.

The instructions executable by the processing circuitry may be arranged as a numerical control program, for example stored in the memory. The numerical control program may comprise computer readable code means, which when executed by the processing circuitry causes the system and the CNC machine tool to perform the method according to any of the embodiments described herein.

The numerical control program may be carried by a computer readable storage medium connectable to the processing circuitry, such as the memory. The memory may be realized as for example a RAM (Random-access memory), ROM (Read-Only Memory) or an EEPROM (Electrical Erasable Programmable ROM). Further, the numerical control program may be carried by a separate computer-readable medium, such as a CD, DVD or flash memory, from which the program could be downloaded into the memory. Alternatively, the numerical control program may be stored on a server or any other entity connected to which the system has access. The numerical control program may then be downloaded from the server into the memory.

According to another aspect, the invention relates to a computer program for generating, based on input comprising information about a turning tool and dimensions of a metal workpiece to be machined, the numerical control program according to any of the embodiments described herein.

Such computer program may for example be a computer program for Computer Aided Manufacturing (CAM) such as a CAD/CAM computer program in which CAD models of the turning tool and workpiece, together with a model of the component to be machined, is used as input to a tool path generating process performed in the CAD/CAM computer program, wherein such computer program for this purpose includes specific modules or functions for generating tool paths in accordance with the machining methods of any of the embodiments described herein, i.e., wherein preferred tool path sequences corresponding to the method steps disclosed in any of the embodiments described herein are stored in such computer program, to be adapted to the specific turning tool properties and workpiece characteristics according to the input.

BRIEF DESCRIPTION OF DRAWINGS

The solution will now be described in more detail by means of exemplary embodiments and with reference to the accompanying drawings, in which:

Fig. 1 illustrates a system comprising a CNC machine tool and a turning tool for machining a workpiece, wherein the figure also includes an enlarged view of the turning tool machining the workpiece.

Fig. 2A - 2C illustrate steps of a method according to the invention.

Fig. 3 is a perspective view of a cutting insert that is utilized as first cutting insert according to some embodiments of the method.

Fig. 4 is a perspective view of a cutting insert that is utilized as second cutting insert according to some embodiments of the method.

Figs. 5A - 5F illustrate steps of a method according to an embodiment using a turning tool that includes two cutting inserts.

Figs. 6A - 6D illustrate steps of a method according to an embodiment using a turning tool that includes three cutting inserts.

Figs. 7A - 7E illustrate steps of a method according to an embodiment using a turning tool with a different configuration of cutting inserts.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

DETAILED DESCRIPTION OF EMBODIMENTS

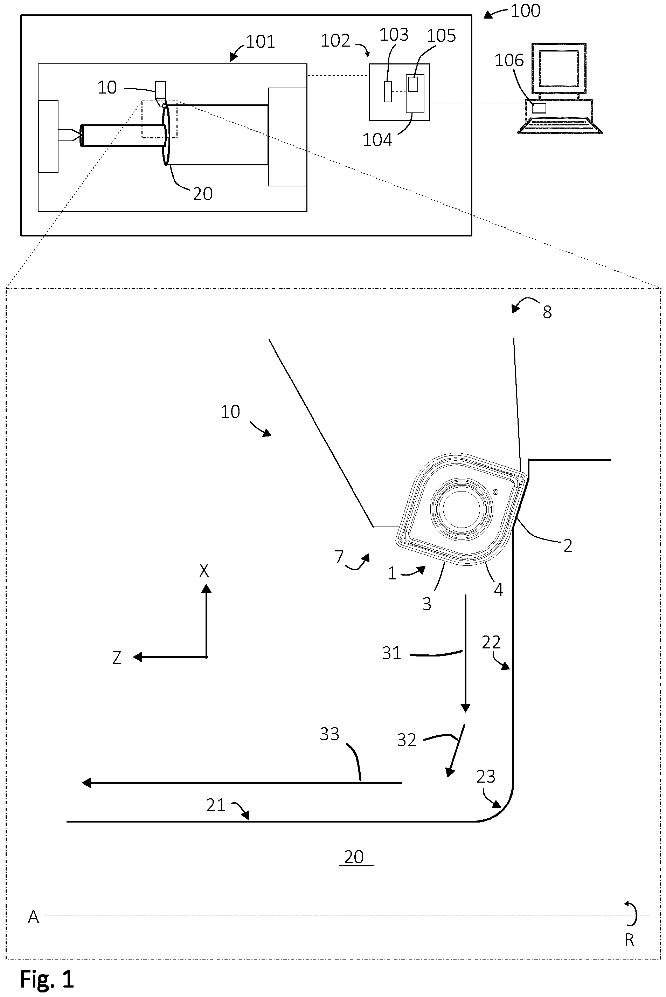

Fig. 1 shows a system 100 according to the invention that comprises a CNC machine tool 101, schematically illustrated in Fig. 1 as including a turning tool 10 and a workpiece 20 to be machined. The system 100 further comprises a controller 102 for controlling the cutting process, which controller may be an integral part of the CNC machine tool 101. The CNC machine tool 101 may for example be a CNC lathe or any other machine tool which can be used for turning a metal work piece and is controlled by a computer. The controller 102 comprises processing circuitry 103 and a memory 104 in which a numerical control program 105 is stored. The controller 101 is communicationally coupled to the CNC machine tool 101 for control thereof.

Fig. 1 also shows a computer comprising a computer program 106 that can be used for generating the numerical control program 105, at least partly based on input regarding the characteristics of the turning tool 10 and the workpiece 20. The numerical control program 105 obtained from the use of the computer program 106 is loaded into the memory 104.

When the numerical control program 105 is executed by the processing circuitry 103, the controller is configured to control the CNC machine tool 101, including the turning tool 10, to perform a method for machining the rotating workpiece 20, which method will be described in further detail below.

The enlarged portion in fig. 1 illustrates a part of the workpiece including a longitudinal portion 21 extending parallel with the rotation axis A along a longitudinal direction Z, a radial portion (shoulder) 22 extending in a direction perpendicular to the rotation axis A in a radial direction X, and a corner portion 23 connecting the shoulder 22 and the longitudinal portion 21.

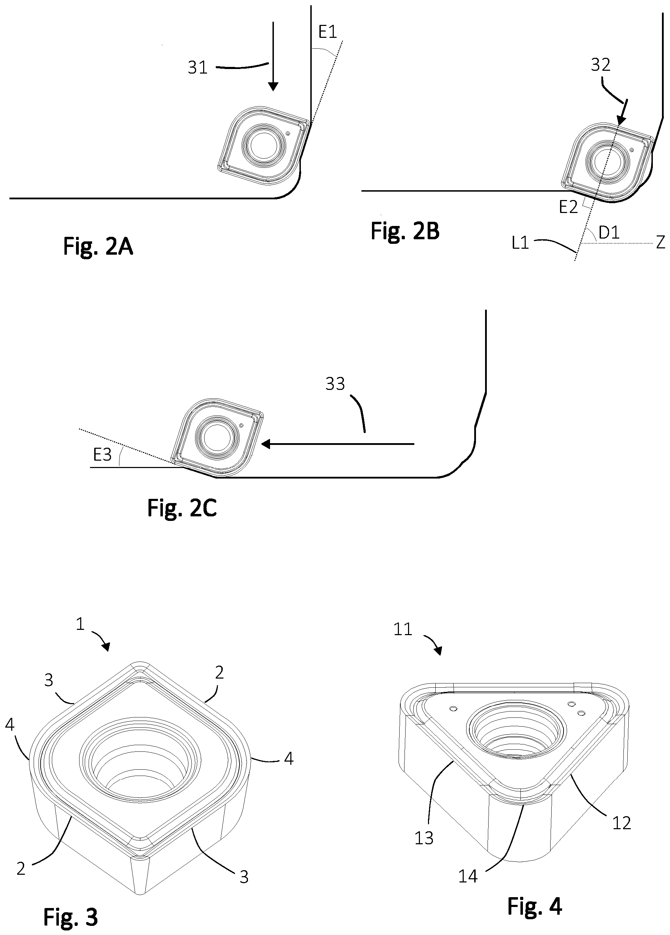

The turning tool 10 includes a tool body having a longitudinal extension from a rear end 8 to a front end 7 thereof. A first cutting insert 1 is arranged at the front end 7. The first cutting insert 1, illustrated in more detail in Fig. 3, comprises a first cutting edge 2, a second cutting edge 3 and a corner cutting edge 4 connecting the first cutting edge 2 and the second cutting edge 3. The first cutting insert 1 is indexable and comprises two such sets of cutting edges. In Fig. 1, only the cutting edges currently arranged as active are denoted by reference numerals 2-4.

In the illustrated embodiment, the nose angle between the first and second cutting edge is 90°.

The method, illustrated in Fig. 1 and in Figs. 2A, 2B and 2C (in which, for clarity, only the first cutting insert 1 is illustrated and not the tool body) begins with a facing step 31 in which the turning tool 10 is moved along the radial direction X towards the rotation axis A and the corner portion 23 such that the first cutting insert 1 cuts chips from the radial portion 22 of the metal workpiece. Fig. 2A illustrates the entering angle E1 of the first cutting edge 2. In the illustrated embodiment, the entering angle E1 is approximately 18° during the facing step 31.

Thereafter, in a first entering step 32, before the first cutting insert 1 reaches the longitudinal portion 21, the turning tool is moved away from the radial portion 22 and towards the rotation axis A along a first entering path L1 that is transverse to both the longitudinal direction Z and the radial direction X, such that the first cutting insert cuts chips from the longitudinal portion 21 of the metal workpiece. Fig. 2B illustrates the first entering path L1, in this case a straight line forming an angle D1 of approximately 72° to the longitudinal direction Z, resulting in an entering angle E2 of the second cutting edge 3. In the illustrated embodiment, the entering angle E2 is approximately 90° during the first entering step 32.

Thereafter, in a first longitudinal turning step 33, the turning tool is moved along the longitudinal direction Z away from the radial portion 22 such that the first cutting insert cuts chips from the longitudinal portion 21 of the metal workpiece. Fig. 2C illustrates the entering angle E3 of the second cutting edge 3. In the illustrated embodiment, the entering angle E3 is approximately 18° during the first longitudinal entering step 33.

In all the figures, the method steps 31-33, and the optional subsequent method steps 34-36 that will be described in further detail below, are illustrated by arrows indicating the corresponding feed directions, i.e., the directions in which the turning tool 10 is moved in relation to the rotating workpiece 20.

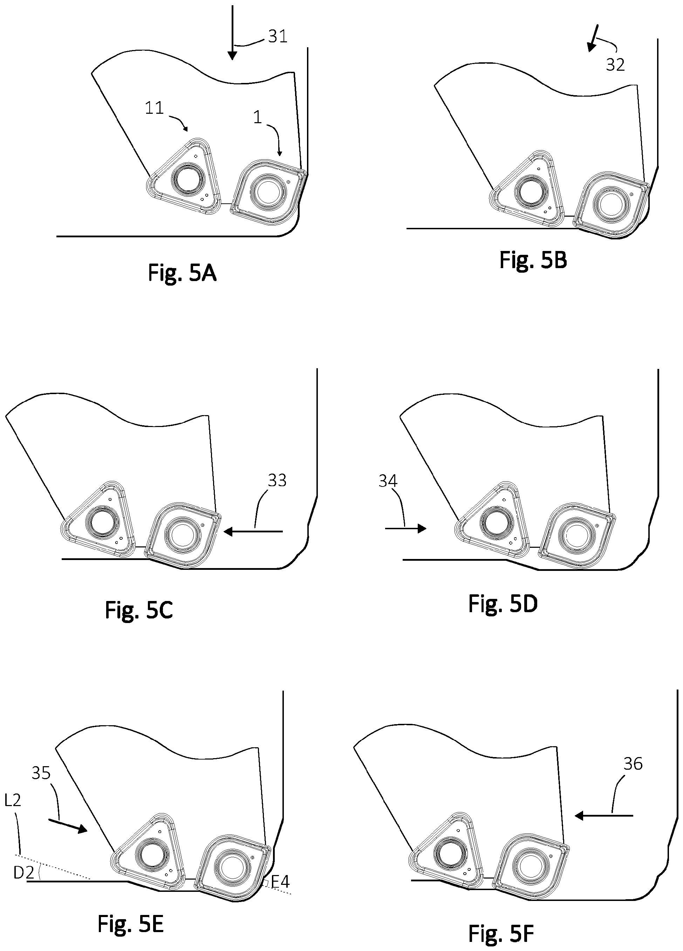

Fig. 4 shows an example of a second cutting insert 11 that may be arranged at the front end 7 of the tool body of the turning tool 10, as illustrated in Figs 5A - 5F. Like the first cutting insert 1, the second cutting insert 11 also includes a first cutting edge 12, a second cutting edge 13 and a nose cutting edge 14. In the illustrated embodiment, the first cutting edge 12 is not intended for cutting when in a position in which the second cutting edge is active (for longitudinal turning). However, the second cutting insert according to this exemplary embodiment is three times indexable and the first cutting edge 12 would therefore, in another indexing position, correspond to a second cutting edge 13 and thus be arranged for cutting chips from the workpiece during longitudinal turning.

Fig. 5A - 5C illustrate the facing step 31, the first entering step 32 and the longitudinal turning step 33, respectively, which completely correspond to the method steps illustrated in Figs. 2A - 2C. However, in the embodiment illustrated in Figs. 5A-5F, the method also includes additional steps. As illustrated in Fig. 5D, in a positioning step 34 (carried out after the first longitudinal turning step 33), the turning tool is moved along the longitudinal direction Z towards the radial portion 22 to an intended start position for a subsequent second entering step 35, illustrated in Fig. 5E.

The intended start position, in this case, is the position in which radial clearance for the second cutting insert 11 with respect to the workpiece 20 is obtained. This corresponds to a position in which at least a part of the second cutting insert 11 is located radially outwards from a part of the workpiece surface that has already been machined by the first cutting insert during the first longitudinal turning step, such that the second cutting insert 11 will not engage the workpiece during the subsequent second entering step 35.

As illustrated in Fig. 5E, the second entering step includes moving the turning tool 10 towards the radial portion 22 and the rotation axis A along a second entering path L2 that is transverse to both the longitudinal direction Z and the radial direction X. The second entering path L2, in this case a straight line forming an angle D2 of approximately 18° to the longitudinal direction Z, results in an entering angle E4 of the first cutting edge 2 of the first cutting insert 1. In the illustrated embodiment, the entering angle E4 is approximately 90° during the second entering step 35.

Thereafter, as illustrated in Fig. 5F, a second longitudinal turning step 36 is performed in which the turning tool is moved along the longitudinal direction Z away from the radial portion 22 such that both the first cutting insert 1 and the second cutting insert 11 cut chips from the longitudinal portion 21 of the metal workpiece. In the illustrated embodiment, the entering angle of the second cutting edge 13 of the second cutting insert 11 is the same as the entering angle of the second cutting edge 3 of the first cutting insert 1, in this case about 18°.

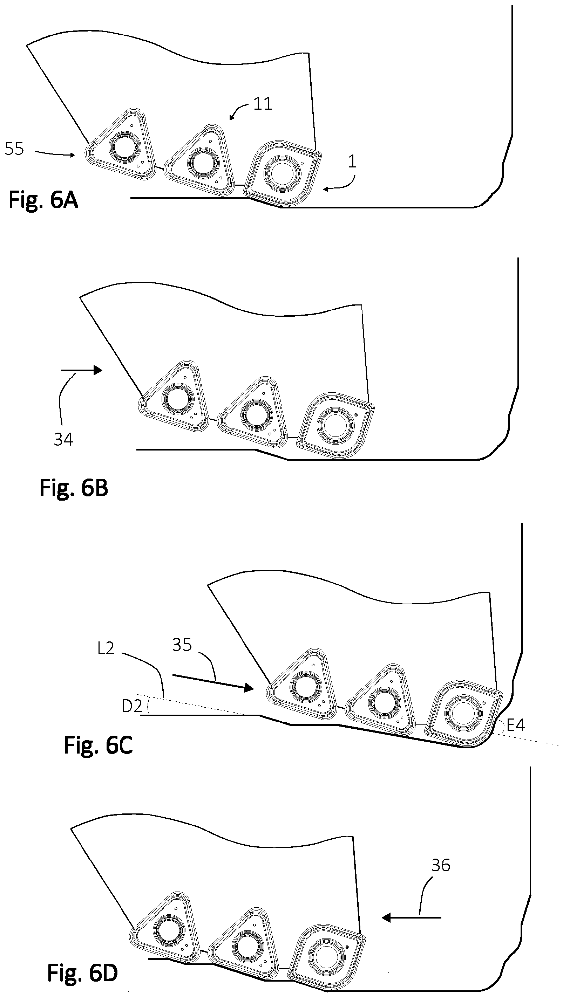

Figs. 6A-6D illustrate an embodiment of the turning method when using a turning tool including three cutting inserts, i.e., a first cutting insert 1, a second cutting insert 11 and a third cutting insert 55, arranged at the front end of the turning tool body. Such arrangement may provide for an even greater cutting depth during the second longitudinal turning step 36. Fig. 6A illustrate the position of the turning tool just after the first longitudinal turning step 33. The method illustrated in Figs. 6A - 6D differs from the embodiment illustrated in Figs. 5A - 5F only in that a different second entering path L2 is used.

After the positioning step 34, one possibility (which is not illustrated) would be to perform the second entering step exactly as in the previous embodiment illustrated in Fig. 5E, i.e., with a rather steep second entering path L2, until the second cutting insert 11 reaches the workpiece surface, and then continue the method with another positioning step, until radial clearance with respect to the workpiece is once again obtained for the second (and the third) cutting insert, and then a subsequent third entering step to reach the full cutting depth before performing the second longitudinal turning step 36. In other words, it would be possible to perform entry into the workpiece material in a number of entering steps that corresponds to the number of cutting inserts. However, an alternative approach, illustrated by Fig. 6C, would be to choose a less steep second entering path L2, forming a relatively small angle D2 to the longitudinal direction Z, such that the full cutting depth can be reached without the second or third cutting inserts encountering the workpiece surface during the second entering step 35. Thereafter, the second longitudinal turning step 36 can be performed in a similar way as for previously described embodiments. Such less steep second entering path L2 would result in a slightly smaller entering angle E4 of the first cutting edge 2 of the first cutting insert 1 which might be beneficial for some applications. In the embodiment illustrated in Fig. 6C, the second entering path L2 forms an angle D1 of approximately 10° to the longitudinal direction Z, resulting in an entering angle E4 of the first cutting edge of approximately 80°.

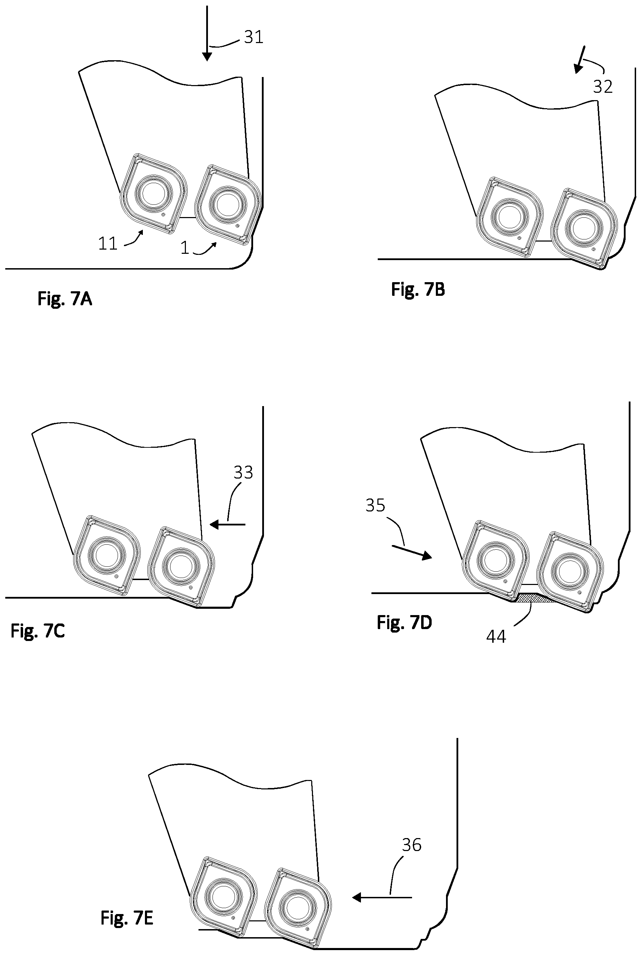

Figs. 7A-7E illustrate an alternative approach used for the second entering step 35. In the illustrated embodiment, the first cutting insert 1 and the second cutting insert 11 are of the same type, although oriented differently (rotated 90°) compared to the first cutting insert 1 in previously illustrated embodiments, such that a cutting edge that was denoted as a first cutting edge 2 in previous embodiments now corresponds to a second cutting edge 3, and vice versa. The facing step 31, the first entering step 32, and the first longitudinal turning step 33, illustrated in Figs 7A - 7C, are performed in the same manner as in previously described embodiments. However, with this cutting insert setup, it is possible to continue with the second entering step 35 immediately after the first longitudinal turning step 33. This is because the second cutting insert 11 is of a type and arranged such that it can engage the workpiece in a direction along the second entering path, as illustrated in Fig. 7D. In the illustrated embodiment, the entering angles of the first cutting edges of the respective first and second cutting inserts are the same, in this case approximately 90°. The subsequent second longitudinal turning step 36 is performed in a manner similar to previously described embodiments. A difference compared to previous embodiments is that the first cutting insert 1 will have to pass through a small region of additional uncut material 44 (indicated in Fig. 7D) during the second longitudinal turning step, which is not favorable and would not be feasible in the long run but is acceptable due to the small size of such region of additional material 44.

## Claims

1. A method for machining a surface of a metal workpiece (20) using a turning tool (10), wherein the turning tool (10) comprises a tool body having a longitudinal extension from a rear end (7) to a front end (8) thereof, and a first cutting insert (1) arranged at the front end (8), wherein the first cutting insert includes:

    - a first cutting edge (2),
    - a second cutting edge (3), and
    - a convex nose cutting edge (4) connecting the first and the second cutting edges (2,3),
    and wherein the metal workpiece (20) rotates around a rotation axis (A) extending along a longitudinal direction (Z) of the workpiece, wherein the metal workpiece (20) comprises:

    - a longitudinal portion (21) extending in the longitudinal direction (Z),
    - a radial portion (22) extending in a radial direction (X) with respect to the rotation axis (A), and
    - a corner portion (23) connecting the longitudinal portion (21) and the radial portion (22),

    wherein the method comprises:

    - a facing step (31) in which the turning tool is moved along the radial direction (X) towards the rotation axis (A) and the corner portion (23) such that the first cutting insert (1) cuts chips from the radial portion (22) at an entering angle (E1) of the first cutting edge (2) of 10°- 45°;
    - a first entering step (32) in which the turning tool, before the first cutting insert reaches the longitudinal portion, is moved away from the radial portion and towards the rotation axis along a first entering path (L1) that is transverse to both the longitudinal direction (Z) and the radial direction (X), such that the first cutting insert cuts chips from the longitudinal portion (21) at an entering angle (E2) of the second cutting edge (3) of 45°-120°; and
    - a first longitudinal turning step (33) in which the turning tool (10) is moved along the longitudinal direction (Z) away from the radial portion (22) such that the first cutting insert (2) cuts chips from the longitudinal portion (21) at an entering angle (E3) of the second cutting edge (3) of 10°-45°.

2. The method according to claim 1, wherein the entering angle of the second cutting edge (E2) in the first entering step is in the range 80°- 100°.

3. The method according to any of the previous claims, wherein the first entering path (L1) is a straight line that forms a first angle (D1) of 40° - 80° to the longitudinal direction (Z).

4. The method according to any of the previous claims, wherein the method comprises, after the first longitudinal turning step:

    - a second entering step (35) in which the turning tool is moved towards the radial portion and the rotation axis along a second entering path (L2) that is transverse to both the longitudinal direction (Z) and the radial direction (X), such that the first cutting insert (1) cuts chips from the longitudinal portion (21) at an entering angle of the first cutting edge (2) of 60°-120°; and
- a second longitudinal turning step (36) in which the turning tool (10) is moved along the longitudinal direction (Z) away from the radial portion (22) such that the first cutting insert (1) cuts chips from the longitudinal portion (21) at an entering angle of the second cutting edge (3) of 10°- 45°.

5. The method according to claim 4, wherein the second entering path (L2) is a straight line that forms a second angle (D2) of 5° - 45° to the longitudinal direction (Z).

6. The method according to claim 5, wherein the second angle (D2) is equal to, or less than, the entering angle of the second cutting edge (3) in the second longitudinal turning step (36).

7. The method according to any of the claims 4-6, wherein the turning tool comprises a second cutting insert (11) that includes:

   - a first cutting edge (12),
   - a second cutting edge (13), and
   - a convex nose cutting edge (14) connecting the first and the second cutting edges,

   and wherein the second cutting insert (11) is arranged at the front end of the tool body (10) beside the first cutting insert (1) such that, with respect to the longitudinal extension of the tool body (10), a front point of the second cutting insert is located rearward of a front end, but forward of a rear end, of the second cutting edge of the first cutting insert, and wherein, in the second longitudinal turning step, both the first cutting insert and the second cutting insert cut chips from the longitudinal portion at entering angles of the respective second cutting edges of 10°- 45°.

8. The method according to claim 7, wherein the second cutting insert engages the workpiece during at least a part of the second entering step, wherein both the first and the second cutting inserts cut chips from the longitudinal portion at entering angles of the respective first cutting edges of 60°-120°.

9. The method according to any of the claims 4-8, wherein the method comprises, after the first longitudinal turning step and before the second entering step:

   - a positioning step (34) in which the turning tool is moved along the longitudinal direction towards the radial portion to an intended start position for the second entering step.

10. The method according to claim 9 when dependent on claim 7, wherein the intended start position for the second entering step is a position in which radial clearance for the second cutting insert with respect to the workpiece is obtained.

11. The method according to any of the previous claims, wherein at least one of the facing step, the first entering step and the second entering step comprises cutting chips from at least a part of the corner portion (23).

12. A system (100) comprising a computer numerical controlled machine tool (101) including a turning tool (10) for machining a metal workpiece (20), wherein the system further comprises processing circuitry (103) and a memory (104) and is configured to perform the method according to any of the claims 1-11.

13. A numerical control program (105), comprising computer readable code means to be executed by the processing circuitry (103) of the system (100) according to claim 12, which computer readable code means when executed causes the system to perform the method according to any of the claims 1-11.

14. A computer program for generating, based on input comprising information about a turning tool and dimensions of a metal workpiece to be machined, the numerical control program according to claim 13.

Fig. 1

Fig. 2A

Fig. 2B

Fig. 2C

Fig. 3

Fig. 4

Fig. 5A

Fig. 5B

Fig. 5C

Fig. 5D

Fig. 5E

Fig. 5F

Fig. 6A

Fig. 6B

Fig. 6C

Fig. 6D

Fig. 7A

Fig. 7B

Fig. 7C

Fig. 7D

Fig. 7E

## EUROPEAN SEARCH REPORT

**Application Number**

EP 24 21 7615

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 359 321 B1 (SANDVIK INTELLECTUAL PROPERTY [SE]) 11 November 2020 (2020-11-11) | 1-6, 11-14 | INV. B23B1/00 B23B27/16 |
| Y | * paragraph [0040] - paragraph [0044]; figures 2, 2a * * paragraph [0046] - paragraph [0051] * ----- | 7-10 | |
| Y | DE 27 34 095 A1 (UGINE ACIERS) 2 February 1978 (1978-02-02) * figures 7,8,12 * ----- | 7-10 | |
| A | EP 3 702 853 A1 (SANDVIK COROMANT AB [SE]) 2 September 2020 (2020-09-02) * the whole document * ----- | 1 | |
| A | EP 4 198 660 A1 (SANDVIK COROMANT AB [SE]) 21 June 2023 (2023-06-21) * the whole document * ----- | 1 | |

TECHNICAL FIELDS SEARCHED (IPC)

B23B

The present search report has been drawn up for all claims

| Place of search | Date of completion of the search | Examiner |
|---|---|---|
| The Hague | 28 May 2025 | Prelovac, Jovanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7615

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | | Publication date | Patent family member(s) | | Publication date |
|---|---|---|---|---|---|
| EP 3359321 | B1 | 11-11-2020 | BR | 112018006930 A2 | 16-10-2018 |
| | | | CA | 2995759 A1 | 13-04-2017 |
| | | | CN | 108136506 A | 08-06-2018 |
| | | | EP | 3153257 A1 | 12-04-2017 |
| | | | EP | 3359321 A1 | 15-08-2018 |
| | | | EP | 3778077 A1 | 17-02-2021 |
| | | | JP | 6999546 B2 | 18-01-2022 |
| | | | JP | 7364656 B2 | 18-10-2023 |
| | | | JP | 2018530445 A | 18-10-2018 |
| | | | JP | 2022046605 A | 23-03-2022 |
| | | | KR | 20180063118 A | 11-06-2018 |
| | | | KR | 20230097226 A | 30-06-2023 |
| | | | MX | 384863 B | 14-03-2025 |
| | | | RU | 2018115670 A | 11-11-2019 |
| | | | US | 2017100776 A1 | 13-04-2017 |
| | | | US | 2018169765 A1 | 21-06-2018 |
| | | | US | 2019366443 A1 | 05-12-2019 |
| | | | WO | 2017060027 A1 | 13-04-2017 |
| DE 2734095 | A1 | 02-02-1978 | BE | 857196 A | 27-01-1978 |
| | | | CH | 618625 A5 | 15-08-1980 |
| | | | DE | 2734095 A1 | 02-02-1978 |
| | | | DE | 7723609 U1 | 09-10-1980 |
| | | | FR | 2359667 A1 | 24-02-1978 |
| | | | IT | 1081637 B | 21-05-1985 |
| | | | LU | 77860 A1 | 02-02-1978 |
| | | | NL | 7708140 A | 31-01-1978 |
| | | | SE | 433459 B | 28-05-1984 |
| EP 3702853 | A1 | 02-09-2020 | CN | 113490895 A | 08-10-2021 |
| | | | EP | 3702853 A1 | 02-09-2020 |
| | | | JP | 2022523398 A | 22-04-2022 |
| | | | JP | 2025000606 A | 07-01-2025 |
| | | | KR | 20210135489 A | 15-11-2021 |
| | | | US | 2022147011 A1 | 12-05-2022 |
| | | | WO | 2020177968 A1 | 10-09-2020 |
| EP 4198660 | A1 | 21-06-2023 | CN | 118318214 A | 09-07-2024 |
| | | | EP | 4198660 A1 | 21-06-2023 |
| | | | JP | 2025500828 A | 15-01-2025 |
| | | | KR | 20240124909 A | 19-08-2024 |
| | | | US | 2025050424 A1 | 13-02-2025 |
| | | | WO | 2023110987 A1 | 22-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3359321 B1